# EUROPEAN PATENT SPECIFICATION

(11) **EP 3 029 365 B1**
(45) Date of publication and mention of the grant of the patent: **04.10.2017**
(21) Application number: 14195643.3
(22) Date of filing: 01.12.2014
(51) Int. Cl.: F16L 5/10, F16L 17/025, F16L 21/035, F16L 25/00

(54) **Combination of a structural element, a pipe and an annular elastic seal**
Kombination eines Strukturelements, eines Rohrs und einer ringförmigen elastischen Dichtung
Combinaison d'un élément structurel, un tuyau et un joint élastique annulaire

(43) Date of publication of application: 08.06.2016
(73) Proprietor: Secil Kaucuk San. Tic. A.S., 33400 Mersin (TR)
(72) Inventor: Cavca, Elvir, 331 34 Värnamo (SE)
(74) Representative: Awapatent AB

(56) References cited:
- EP-A1- 0 859 183
- DE-A1-102005 015 680
- DE-U1-202007 015 375
- US-A1- 2004 150 170

## Description

### Technical Field

The present invention concerns a combination of a structural element, a pipe and an annular elastic seal, wherein said structural element comprises a circular orifice, which has a plain outer mouth area and inside thereof a cylindrical bore area, and wherein said seal is to provide a watertight seal between said structural element and said pipe when an abutment wall of an outer flange portion at a first end of said seal abuts against said mouth area and a remainder of said seal, including a second end of said seal, is inserted in said orifice and said pipe is extending through an entire length of said seal.

### Prior Art

In the document US 6 126 173 a combination and a seal according to the preamble are described. The pipe of the combination revealed is a plain pipe and does therefore usually not pose any major tightness problems when being mounted in an orifice of a structural element, such as a cored manhole, by means of an annular elastic seal, whether that seal is shaped solid, as claimed in the document, or comprises an internal cavity, as described for the relevant prior art to that document. However, if instead a corrugated pipe is to be used for the combination, the prior art seals fail to provide a working solution, because corrugation crests and valleys tend to cause leakage due to insufficient pliability of the seals. This is a big disadvantage, as corrugated pipes become more and more common thanks to their excellent durability.

In another prior art document, DE 20 2007 015375 U1, an annular elastic seal is described, which comprises a mid portion between an outer flange portion and an inner flange portion. The mid portion comprises a base, which extends from an abutment wall of the outer flange portion towards the inner flange portion, and a ramp, which rises from the outer flange portion towards a top, which runs in parallel with said base towards the inner flange portion. There is a first wall connecting the base and the ramp at the outer flange portion and a second wall connecting the base and the top at the inner flange portion. Further, in order to make the seal softer, there are three cavities between between said base and said top. The known elastic seal is to be used for concrete pipes and the like, but not to compensate for largely varying diameters, such as in corrugated pipes.

### Object of the invention

Against that background an object of the present invention is to provide a combination and a seal according to the preamble rendering use of corrugated pipes possible without any major risk of leakage.

### Brief Summary of the invention

According to the present invention the above object is achieved by means of a combination according to the preamble, said combination being characterized in that that said pipe has annular corrugations, which form equidistantly spaced apart crests on an even level of height, and in that said seal comprises a mid portion between said outer flange portion and an inner flange portion, wherein said mid portion, when seen in cross-section in a no-load condition, comprises a straight base, which extends from said abutment wall to said second end, a ramp, which rises in relation to said base from said first end towards said second end, a first wall connecting said base and ramp adjacent to said outer flange portion, a second wall connecting said base and ramp adjacent to said inner flange portion, and a central cavity arranged between said first wall and said second wall and between said base and said ramp, wherein said cavity has a width between said first wall and said second wall corresponding to at least a distance between two crests of said pipe and a height between said base and said ramp corresponding to about half said width, wherein said second wall has a height corresponding to about twice a height of said first wall and a width corresponding to at least a valley between two crests of said pipe, and wherein said inner flange portion comprises a bottom flange in line with said base and an upright stabilizing projection, which is spaced apart from said second wall by an interval and has a height not exceeding about half the height of said second wall.

Contrary to the cited document, where one tries to avoid leakage problems by eliminating a cavity inside a seal and by shaping a ramp portion in a concave manner, according to the present invention a rather large cavity is used to provide an improved elasticity, and an extra long ramp to ensure that always at least two crests of annular corrugations of a pipe are in contact with the seal. Further, the wide second wall and the inner flange portion provide necessary stability despite an inescapable weakening of the seal structure by said cavity.

Preferably, said cavity is quadrilateral with round corners and sides extending in parallel with said base, said ramp, said first wall and said second wall, respectively. A cavity shaped in that way without any sharp corners is less prone to break.

Preferably, said ramp centrally on top of said second wall has a ridge, from where said ramp stretches in parallel with said base towards said second end. Thanks to the ridge a corrugated pipe inserted into the seal tends to snap into place in a well defined way when a valley between two adjacent annular corrugations reaches the ridge.

Preferably, said interval has a width corresponding to about half the width of said second wall. The interval is advantageous because it allows the second wall to deform more freely when interacting with the corrugated pipe.

Preferably, said second wall on a side facing away from said cavity tapers towards said base. This solution does also improve flexibility.

Preferably, said base below said second wall has a tapering ridge portion, which projects downwards so far that it touches an imaginary line touching a bottom first end corner of said outer flange portion and a bottom second end corner of said inner flange portion. The ridge portion can be used to anchor the seal inside of the orifice of the structural element, especially if the orifice is provided with a corresponding internal slot. However, the ridge portion is advantageous, too, if the seal is manufactured by extrusion. In that case said corners and the ridge portion serve to support the base of an extruded seal blank evenly when laid out on a conveyor.

Preferably, said ramp on top of said first wall has a lip, which projects upwards to a height substantially corresponding to a height of a mid portion of said ramp. The lip serves to protect the ramp above the cavity by guiding a pipe when being inserted into the seal.

According to alternative embodiments, said cavity can comprise reinforcement webs, which interconnect said base and said ramp. In some cases it is advantageous to use such reinforcement webs to improve integrity of the seal.

Preferably, said seal is made of an elastomer selected from a group of elastomers comprising vulcanized rubber or TPE. Elastomers from that group have proved to be well suited in all respects.

Preferably, said outer flange portion and said inner flange portion have a material hardness comprised in an interval of preferably 70-90 IRHD, and more preferably of 75-85 IRHD, and wherein said mid portion has a material hardness comprised in an interval of preferably 35-65 IRHD, and more preferably of 40-50 IRHD. The given intervals of material hardness result in seals which are both sufficiently flexible and stable to reach optimum results.

Preferably, said outer flange portion, said mid portion and said inner flange portion are co-extruded. Co-extrusion is a well known manufacturing process and easier to use than for instance vulcanization of separate seal parts.

According to an alternative embodiment, said seal has a material hardness comprised in an interval of preferably 40-85 IRHD, and more preferably of 40-75 IRHD. These intervals are preferably applicable if the seal comprises a single material hardness.

### Brief Description of the Drawings

In the drawings embodiments of the present invention are shown schematically, wherein:
Fig. 1 is a cross sectional view of parts of a combination of a structural element, a corrugated pipe and an annular elastic seal,
Fig. 2 is a cross sectional view of part of a seal according to a preferred embodiment,
Fig. 3 is a cross sectional view of part of a seal according to a first alternative embodiment, and
Fig. 4 is a cross sectional view of part of a seal according to a second alternative embodiment.

### Detailed Description of a Preferred Embodiment

In the following a preferred embodiment as well as two alternative embodiments are described, wherein identical reference numbers are used in all figures to denote corresponding details.

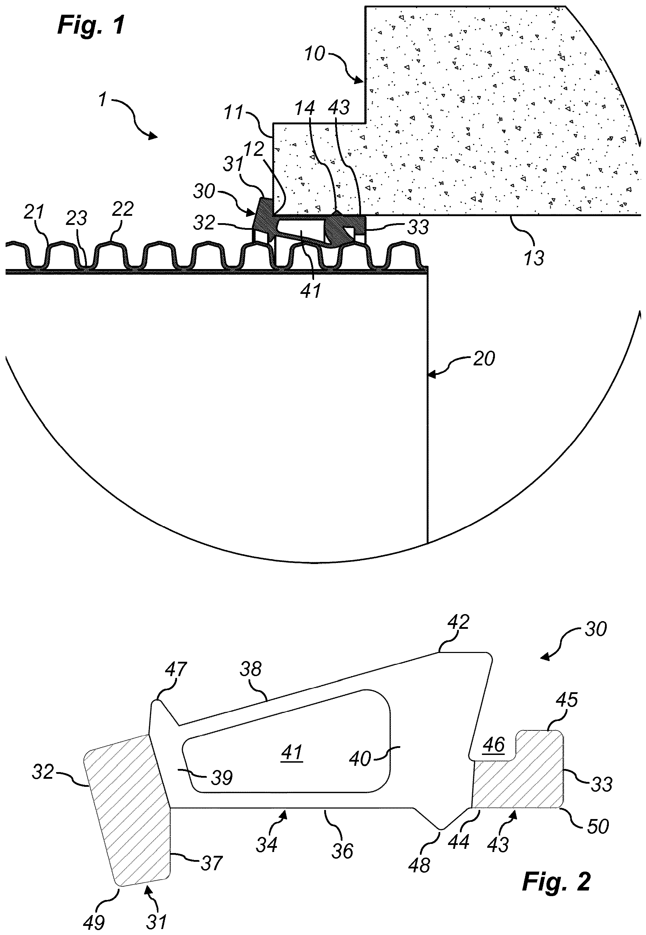

In Fig. 1 a combination 1 of a structural element 10, a pipe 20 and an annular elastic seal 30 is shown to illustrate how parts 10, 20 and 30 are to cooperate in a watertight way.

The structural element 10 is for instance a manhole of concrete and comprises a circular orifice 11, which has a plain outer mouth area 12 and inside thereof a cylindrical bore area 13. Structural elements of this kind are well known. Hence no further description is needed besides the remark that they often are arranged below ground.

The pipe 20 is a corrugated pipe of a plastic material and has annular corrugations 21, which form equidistantly spaced apart crests 22 on an even level of height. Pipes of this kind are well known and have become more and more common due to their excellent durability, especially when laid out below ground.

The seal 30 is to provide a watertight seal between the structural element 10 and the corrugated pipe 20 when an outer flange portion 31 at a first end 32 of the seal abuts against the mouth area 12 of the structural element 10 and a remainder of the seal, including a second end 33 of the seal 30, is inserted in the orifice 11 of the structural element 10 and the pipe 20 is extending through an entire length of the seal 30, thereby compressing the seal 30, just as illustrated in fig. 1.

Now, in order to describe the seal 30 in greater detail, we refer to fig. 2, in which only the seal 30 is shown in an enlarged scale compared to fig. 1. A further illustration difference is that the part of the seal shown in fig. 2 is oppositely oriented (the seal 30 is annular and fig. 1 shows a top part and fig. 2 a bottom part), and that the seal 30 in fig. 2 is illustrated in a relaxed or no-load condition.

As can be seen the seal 30 comprises a mid portion 34 between the outer flange portion 31 at the first end 32 and an inner flange portion 35 at the second end 33. The mid portion 34 comprises a straight base 36, which extends from an abutment wall 37 of the outer flange portion 31 to the second end 33. Opposite to the base 36 there is a ramp 38, which rises in relation to said base 36 from the first end 32 towards the second end 33. Adjacent to the outer flange portion 31 at the first end 32 there is a first wall 39, which connects the base 36 with the ramp 38, and adjacent to the inner flange portion 35 at the second end 33 there is a second wall 40, which connects the base 36 with the ramp 38.

Centrally inside of the mid portion 34 a central cavity 41 is arranged between the first wall 39 and the second wall 40 and between the base 36 and the ramp 38. The cavity 41 is quadrilateral with round corners and sides extending in parallel with the base 36, the ramp 38, the first wall 39 and the second wall 40, respectively. The cavity 41 has a width between the first wall 39 and the second wall 40 corresponding to at least a distance between two crests 22 of the corrugated pipe 20 (c.f. fig. 1) and a height between the base 36 and the ramp 38 corresponding to about half said width. As shown in fig. 1, this leads to the ramp 38 covering at least two such crests 22, which is essential for tightness especial when a corrugated pipe 20 is slightly misaligned in relation to the orifice 11 of the structural element 10.

In order to further improve tightness, the second wall 40 has a height corresponding to about twice a height of the first wall 39 and a width corresponding to at least a valley 23 (c.f. fig. 1) between two crests 22 of the pipe 20. Further, centrally on top of the second wall 40 the ramp 38 has a ridge 41, from where the ramp 38 stretches in parallel with the base 36 towards the second end 33. In this way, and as shown in fig. 1, by means of the wide second wall 40 locally a firm pressure can be exerted on corrugations 21 of the pipe 20 even if the second wall 40, promoted by the ridge 42, tends to the placed on top of a valley 23 between two adjacent corrugations 21.

Due to the relatively large cavity 41, the seal 30 would tend to flex excessively when a pipe 20 is inserted therein despite the fact that the outer flange portion 31 just like the wide second wall 40 has a certain stabilizing effect. In order to remedy that the seal 30 comprises an inner flange portion 43, which has a bottom flange 44 in line with the base 36 and an upright stabilizing projection 45, which is spaced apart from the second wall 40 by an interval 46 and has a height not exceeding about half the height of the second wall 40. The interval 46 has a width corresponding to about half the width of the second wall 40 and serves to allow the second wall 40 to flex freely, just as illustrated in fig. 1. Fig. 2 does however better illustrate that flexibility can be improved further, if the second wall 40 on a side facing away from the cavity 41 tapers towards said base 36.

A further measure to improve seal integrity, especially during insertion of a pipe 20 into a seal 30, comprises arrangement of a lip 47 on the ramp 38 on top of the first wall 40. The lip 47 projects upwards to a height substantially corresponding to a height of a mid portion of the ramp 38 and serves to protect the ramp 38 above the cavity 41 by guiding a pipe 20 when being inserted into the seal 30.

The seal 20 comprising the outer flange portion 31, the mid portion 34 and the inner flange portion 43 is preferably extruded into a string of an elastomer selected from a group of elastomers comprising vulcanized rubber or TPE. Said string is then formed into the final annular shape and then glued or vulcanized to adopt its final form. In order to assure that a planar extruded seal blank is not deformed inadvertently, according to the preferred embodiment the base 36 below the second wall 40 has a tapering ridge portion 48, which projects downwards so far that it touches an imaginary line touching a bottom first end corner 49 of the outer flange portion 31 and a bottom second end corner 50 of the inner flange portion 43. By this the ridge portion 48 can serve to support the base 36 of an extruded seal blank evenly when still hot and easy deformable laid out on a conveyor. However, the ridge 48 can also serve to anchor the seal 30 inside the orifice 11 if the orifice, as shown in fig. 1, is provided with a corresponding internal slot 14.

A further improvement of the seal 30 can be achieved by co-extrusion of materials with different hardness. Preferably the outer flange portion 31 and the inner flange portion 43 (c.f. the cross-hatched areas in fig. 2) have a material hardness comprised in an interval of preferably 70-90 IRHD (International Rubber Hardness Degrees), and more preferably of 75-85 IRHD, and the mid portion 34 has a material hardness comprised in an interval of preferably 35-65 IRHD, and more preferably of 40-50 IRHD. By this stability or flexibility are added exactly where needed.

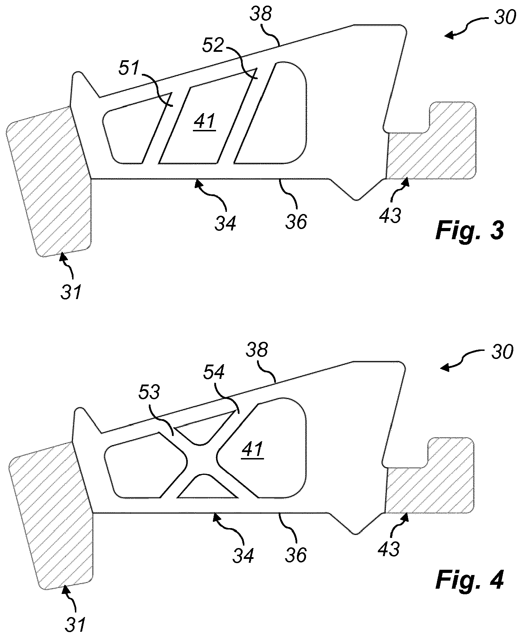

In figs. 3 and 4 alternative embodiments of a seal 30 for a combination 1 according to the present invention are shown. The same reference numbers as before are used for corresponding parts, but for simplicity all parts are not denoted again. The purpose of both embodiments is to further promote integrity of the seal 30, especially during the critical moment when a corrugated pipe 20 is forced into and through the seal 30. As indicated before, the cavity 41 causes a certain weakening of above all the ramp 38 on top of the cavity 41. This weakening can be mitigated substantially by means of two parallel webs 51, 52 (fig. 3) or two intersecting webs 53, 54 (fig. 4) extending through the cavity 41 from the base 36 to the ramp 38.

It is obvious to a person skilled in the art that the described embodiments can be altered within the scope of the pendent claims.

## Claims

1. A combination (1) of a structural element (10), a pipe (20) and an annular elastic seal (30), wherein said structural element (10) comprises a circular orifice (11), which has a plain outer mouth area (12) and inside thereof a cylindrical bore area (13), and wherein said seal (20) is to provide a watertight seal between said structural element (10) and said pipe (20) when an abutment wall (37) of an outer flange portion (31) at a first end (32) of said seal (30) abuts against said mouth area (11) and a remainder of said seal (30), including a second end (33) of said seal (30), is inserted in said orifice (11) and said pipe (20) is extending through an entire length of said seal (30),
**characterized in**
**that** said pipe (20) has annular corrugations (21), which form equidistantly spaced apart crests (22) on an even level of height, and
**that** said seal (30) comprises a mid portion (34) between said outer flange portion (31) and an inner flange portion (43),
wherein said mid portion (34), when seen in cross-section in a no-load condition, comprises
a straight base (36), which extends from said abutment wall (37) to said second end (33),
a ramp (38), which rises in relation to said base (36) from said first end (32) towards said second end (33),
a first wall (39) connecting said base (36) and ramp (38) adjacent to said outer flange portion (31),
a second wall (40) connecting said base (36) and ramp (38) adjacent to said inner flange portion (43), and
a central cavity (41) arranged between said first wall (39) and said second wall (40) and between said base (36) and said ramp (38),
wherein said cavity (41) has a width between said first wall (39) and said second wall (40) corresponding to at least a distance between two crests (22) of said pipe (20) and a height between said base (36) and said ramp (38) corresponding to about half said width,
wherein said second wall (40) has a height corresponding to about twice a height of said first wall (39) and a width corresponding to at least a valley (23) between two crests (22) of said pipe (20), and
wherein said inner flange portion (43) comprises a bottom flange (44) in line with said base (36) and an upright stabilizing projection (45), which is spaced apart from said second wall (40) by an interval (46) and has a height not exceeding about half the height of said second wall (40).

2. The combination (1) according to claim 1, wherein said cavity (41) is quadrilateral with round corners and sides extending in parallel with said base (36), said ramp (38), said first wall (39) and said second wall (40), respectively.

3. The combination (1) according to claim 1 or 2, wherein said ramp (38) centrally on top of said second wall (40) has a ridge (42), from where said ramp (38) stretches in parallel with said base (36) towards said second end (33).

4. The combination (1) according to any one of claims 1-3, wherein said interval (46) has a width corresponding to about half the width of said second wall (40).

5. The combination (1) according to any one of claims 1-4, wherein said second wall (40) on a side facing away from said cavity (41) tapers towards said base (36).

6. The combination (1) according to any one of claims 1-5, wherein said base (36) below said second wall (40) has a tapering ridge portion (48), which projects downwards so far that it touches an imaginary line touching a bottom first end corner (49) of said outer flange portion (31) and a bottom second end corner (50) of said inner flange portion (43).

7. The combination (1) according to any one of claims 1-6, wherein said ramp (38) on top of said first wall (40) has a lip (47), which projects upwards to a height substantially corresponding to a height of a mid portion of said ramp (38).

8. The combination (1) according to any one of claims 1-7, wherein said cavity (41) comprises reinforcement webs (51, 52; 53, 54), which interconnect said base (36) and said ramp (38).

9. The combination (1) according to any one of claims 1-8, wherein said seal (30) is made of an elastomer selected from a group of elastomers comprising vulcanized rubber or TPE.

10. The combination (1) according to any one of claims 1-9, wherein said outer flange portion (31) and said inner flange portion (43) have a material hardness comprised in an interval of preferably 70-90 IRHD, and more preferably of 75-85 IRHD, and wherein said mid portion (34) has a material hardness comprised in an interval of preferably 35-65 IRHD, and more preferably of 40-50 IRHD.

11. The combination (1) according to 10, wherein said outer flange portion (31), said mid portion (34) and said inner flange portion (43) are co-extruded.

12. The combination (1) according to any one of claims 1-9, wherein said seal (30) has a material hardness comprised in an interval of preferably 40-85 IRHD, and more preferably of 40-75 IRHD.

## Patentansprüche

1. Kombination (1) eines Strukturelements (10), eines Rohrs (20) und einer ringförmigen elastischen Dichtung (30), wobei das Strukturelement (10) eine Ringöffnung (11) umfasst, die einen einfachen äußeren Mundbereich (12) und innerhalb davon einen zylindrischen Bohrungsbereich (13) aufweist, und wobei die Dichtung (20) eine wasserdichte Abdichtung zwischen dem Strukturelement (10) und dem Rohr (20) bereitstellen soll, wenn eine Widerlagerwand (37) eines äußeren Flanschabschnitts (31) an einem ersten Ende (32) der Dichtung (30) gegen den Mundbereich (11) anliegt und ein Rest der Dichtung (30), der ein zweites Ende (33) der Dichtung (30) umfasst, in die Öffnung (11) eingeführt ist und sich das Rohr (20) durch eine Gesamtlänge der Dichtung (30) erstreckt;
**dadurch gekennzeichnet,**
**dass** das Rohr (20) ringförmige Riffeln (21) aufweist, die in gleichem Abstand voneinander beabstandete Kuppen (22) auf einem gleichen Höhenniveau bilden, und
**dass** die Dichtung (30) einen mittleren Abschnitt (34) zwischen dem äußeren Flanschabschnitt (31) und einem inneren Flanschabschnitt (43) umfasst,
wobei der mittlere Abschnitt (34) im Querschnitt gesehen in einem unbelasteten Zustand eine gerade Basis (36) umfasst, die sich von der Widerlagerwand (37) zum zweiten Ende (33) erstreckt,
eine Rampe (38), die in Bezug auf die Basis (36) vom ersten Ende (32) zum zweiten Ende (33) ansteigt,
eine erste Wand (39), welche die Basis (36) und die Rampe (38) neben dem äußeren Flanschabschnitt (31) verbindet,
eine zweite Wand (40), welche die Basis (36) und die Rampe (38) neben dem inneren Flanschabschnitt (43) verbindet, und
einen zentralen Hohlraum (41), der zwischen der ersten Wand (39) und der zweiten Wand (40) und zwischen der Basis (36) und der Rampe (38) angeordnet ist,
wobei der Hohlraum (41) eine Breite zwischen der ersten Wand (39) und der zweiten Wand (40) aufweist, die mindestens einem Abstand zwischen zwei Kuppen (22) des Rohrs (20) entspricht, und eine Höhe zwischen der Basis (36) und der Rampe (38), die ungefähr der Hälfte der Breite entspricht,
wobei die zweite Wand (40) eine Höhe aufweist, die ungefähr zwei Mal einer Höhe von der ersten Wand (39) entspricht, und eine Breite, die mindestens einer Kehle (23) zwischen zwei Kuppen (22) des Rohres (20) entspricht, und
wobei der innere Flanschabschnitt (43) einen unteren Flansch (44) in einer Linie mit der Basis (36) und einen aufrechten stabilisierenden Vorsprung (45) umfasst, der von der zweiten Wand (40) durch ein Intervall (46) beabstandet ist und eine Höhe aufweist, welche ungefähr die halbe Höhe der zweiten Wand (40) nicht überschreitet.

2. Kombination (1) nach Anspruch 1, wobei der Hohlraum (41) viereckig ist mit runden Ecken und Seiten, die sich entsprechend parallel zu der Basis (36), der Rampe (38), der ersten Wand (39) und der zweiten Wand (40) erstrecken.

3. Kombination (1) nach Anspruch 1 oder 2, wobei die Rampe (38) mittig oben auf der zweiten Wand (40) einen Kamm (42) aufweist, von wo sich die Rampe (38) parallel zu der Basis (36) zum zweiten Ende (33) ausdehnt.

4. Kombination (1) nach einem der Ansprüche 1 bis 3, wobei das Intervall (46) eine Breite aufweist, die ungefähr der halben Breite der zweiten Wand (40) entspricht.

5. Kombination (1) nach einem der Ansprüche 1 bis 4, wobei sich die zweite Wand (40) auf einer Seite, die von dem Hohlraum (41) abgewandt ist, zur Basis (36) verjüngt.

6. Kombination (1) nach einem der Ansprüche 1 bis 5, wobei die Basis (36) unter der zweiten Wand (40) einen sich verjüngenden Kammabschnitt (48) aufweist, der nach unten so weit hervorsteht, dass er eine imaginäre Linie berührt, die eine untere Ecke des ersten Endes (49) des äußeren Flanschabschnitts (31) und eine untere Ecke des zweiten Endes (50) des inneren Flanschabschnitts (43) berührt.

7. Kombination (1) nach einem der Ansprüche 1 bis 6, wobei die Rampe (38) an der Oberseite von der ersten Wand (40) eine Lippe (47) aufweist, die nach oben bis zu einer Höhe hervorsteht, die im Wesentlichen einer Höhe eines mittleren Abschnitts der Rampe (38) entspricht.

8. Kombination (1) nach einem der Ansprüche 1 bis 7, wobei der Hohlraum (41) Verstärkungsbahnen (51, 52; 53, 54) umfasst, welche die Basis (36) und die Rampe (38) miteinander verbinden.

9. Kombination (1) nach einem der Ansprüche 1 bis 8, wobei die Dichtung (30) aus einem Elastomer hergestellt ist, das aus einer Gruppe von Elastomeren ausgewählt ist, die Kautschukvulkanisat oder TPE umfasst.

10. Kombination (1) nach einem der Ansprüche 1 bis 9, wobei der äußere Flanschabschnitt (31) und der innere Flanschabschnitt (43) eine Werkstoffhärte aufweisen, die in einem Intervall von bevorzugt 70 bis 90 IRHD und mehr bevorzugt von 75 bis 85 IRHD enthalten ist, und wobei der mittlere Abschnitt (34) eine Werkstoffhärte aufweist, die in einem Intervall von bevorzugt 35 bis 65 IRHD und mehr bevorzugt von 40 bis 50 IRHD enthalten ist.

11. Kombination (1) nach 10, wobei der äußere Flanschabschnitt (31), der mittlere Abschnitt (34) und der innere Flanschabschnitt (43) coextrudiert sind.

12. Kombination (1) nach einem der Ansprüche 1 bis 9, wobei die Dichtung (30) eine Werkstoffhärte aufweist, die in einem Intervall von bevorzugt 40 bis 85 IRHD und mehr bevorzugt von 40 bis 75 IRHD enthalten ist.

## Revendications

1. Combinaison (1) d'un élément structurel (10), d'un tuyau (20) et d'un joint élastique annulaire (30), dans laquelle ledit élément structurel (10) comprend un orifice circulaire (11) qui comporte une zone d'embouchure externe simple (12), et à l'intérieur de celle-ci une zone d'alésage cylindrique (13), et dans laquelle ledit joint (20) sert à procurer une étanchéité à l'eau entre ledit élément structurel (10) et ledit tuyau (20) quand une paroi de butée (37) d'une portion de bride externe (31) à une première extrémité (32) dudit joint (30) vient à butée contre ladite zone d'embouchure (11), et le reste dudit joint (30), y compris une deuxième extrémité (33) dudit joint (30), est inséré dans ledit orifice (11) et ledit tuyau (20) s'étend à travers une longueur entière dudit joint (30),
**caractérisée en ce que**
ledit tuyau (20) comporte des ondulations annulaires (21), qui forment des crêtes à espacements équidistants (22) à une même hauteur, et
ledit joint (30) comprend une portion médiane (34) entre ladite portion de bride externe (31) et une portion de bride interne (43),
dans laquelle ladite portion médiane (34), vue en section transversale en condition sans charge, comprend
une base rectiligne (36), qui s'étend depuis ladite paroi de butée (37) jusqu'à ladite deuxième extrémité (33),
une rampe (38), qui s'élève par rapport à ladite base (36) depuis ladite première extrémité (32) vers ladite deuxième extrémité (33),
une première paroi (39) qui connecte ladite base (36) et ladite rampe (38) adjacente à ladite portion de bride externe (31),
une deuxième paroi (40) qui connecte ladite base (36) et ladite rampe (38) adjacente à ladite portion de bride interne (43), et
une cavité centrale (41) agencée entre ladite première paroi (39) et ladite deuxième paroi (40) et entre ladite base (36) et ladite rampe (38),
dans laquelle ladite cavité (41) présente une largeur entre ladite première paroi (39) et ladite deuxième paroi (40) correspondant à au moins une distance entre deux crêtes (22) dudit tuyau (20), et une hauteur entre ladite base (36) et ladite rampe (38) correspondant à environ la moitié de ladite largeur,
dans laquelle ladite deuxième paroi (40) présente une hauteur correspondant à environ deux fois une hauteur de ladite première paroi (39) et une largeur correspondant à au moins un creux (23) entre deux crêtes (22) dudit tuyau (20), et
dans laquelle ladite portion de bride interne (43) comprend une bride inférieure (44) alignée avec ladite base (36) et une projection de stabilisation verticale (45), qui est espacée de ladite deuxième paroi (40) d'un intervalle (46) et qui présente une hauteur ne dépassant pas environ la moitié de la hauteur de ladite deuxième paroi (40).

2. Combinaison (1) selon la revendication 1, dans laquelle ladite cavité (41) est quadrilatérale avec des coins arrondis et des côtés respectivement parallèles à ladite base (36), à ladite rampe (38), à ladite première paroi (39) et à ladite deuxième paroi (40).

3. Combinaison (1) selon la revendication 1 ou 2, dans laquelle ladite rampe (38) centrée au-dessus de ladite deuxième paroi (40) présente une arête (42), depuis laquelle ladite rampe (38) s'étend parallèlement à ladite base (36) vers ladite deuxième extrémité (33).

4. Combinaison (1) selon l'une quelconque des revendications 1 à 3, dans laquelle ledit intervalle (46) présente une largeur correspondant à environ la moitié de la largeur de ladite deuxième paroi (40).

5. Combinaison (1) selon l'une quelconque des revendications 1 à 4,
dans laquelle ladite deuxième paroi (40) se rétrécit vers ladite base (36) sur un côté opposé à ladite cavité (41).

6. Combinaison (1) selon l'une quelconque des revendications 1 à 5, dans laquelle ladite base (36) présente une portion d'arête qui se rétrécit (48) sous ladite deuxième paroi (40), et qui se projette vers le bas jusqu'à toucher une ligne imaginaire qui touche le coin inférieur de la première extrémité (49) de ladite portion de bride externe (31) et le coin inférieur de la deuxième extrémité (50) de ladite portion de bride interne (43).

7. Combinaison (1) selon l'une quelconque des revendications 1 à 6,
dans laquelle ladite rampe (38) au-dessus de ladite première paroi (40) présente une lèvre (47), qui se projette vers le haut jusqu'à une hauteur correspondant substantiellement à la hauteur d'une portion médiane de ladite rampe (38).

8. Combinaison (1) selon l'une quelconque des revendications 1 à 7,
dans laquelle ladite cavité (41) comprend des âmes de renfort (51, 52 ; 53, 54) qui connectent ladite base (36) à ladite rampe (38).

9. Combinaison (1) selon l'une quelconque des revendications 1 à 8,
dans laquelle ledit joint (30) est constitué d'un élastomère sélectionné parmi le groupe d'élastomères comprenant le caoutchouc vulcanisé et les élastomères thermoplastiques TPE, soit ThermoPlastic Elastomer.

10. Combinaison (1) selon l'une quelconque des revendications 1 à 9,
dans laquelle ladite portion de bride externe (31) et ladite portion de bride interne (43) présentent une dureté de matériau comprise de préférence dans un intervalle de 70 à 90 IRHD, et de préférence encore de 75 à 85 IRHD, et dans laquelle ladite portion médiane (34) présente une dureté de matériau comprise de préférence dans un intervalle de 35 à 65 IRHD, et de préférence encore de 40 à 50 IRHD.

11. Combinaison (1) selon la revendication 10, dans laquelle ladite portion de bride externe (31), ladite portion médiane (34) et ladite portion de bride interne (43) sont extrudées conjointement.

12. Combinaison (1) selon l'une quelconque des revendications 1 à 9,
dans laquelle ledit joint (30) présente une dureté de matériau comprise de préférence dans un intervalle de 40 à 85 IRHD, et de préférence encore de 40 à 75 IRHD.
